# DEMANDE DE BREVET EUROPEEN

(11) **EP 1 923 687 A1**
(43) Date de publication de la demande: **21.05.2008**
(21) Numéro de dépôt: 07301525.7
(22) Date de dépôt: 06.11.2007
(51) Int. Cl.: G01N 1/26, G01M 15/10

(54) **Dispositif de prélèvement sélectif de gaz d'échappement pour un banc d'essai de moteur**

(30) Priorité: 20.11.2006 FR 0654990
(71) Demandeur: RENAULT S.A.S., 92100 Boulogne Billancourt (FR)
(72) Inventeur: PERCHER, Thomas, 91400, ORSAY (FR)

(57) **Abrégé**

L'invention a pour objet un dispositif de prélèvement sélectif de gaz pour un banc d'essai (A) de moteur (M) comportant des circuits de gaz sur lesquels sont placés divers points de prélèvement (P₁, P₂...) reliés chacun par une ligne de prélèvement (2a, 2b...) à au moins un système de mesure (1).

Selon l'invention, ce dispositif comprend au moins un collecteur (3) sur lequel sont branchées au moins une partie des lignes de prélèvement (2), chacun par l'intermédiaire d'une électrovanne de prélèvement (6), ledit collecteur (3) étant relié, d'une part à au moins un système de mesure (5) par l'intermédiaire d'au moins une électrovanne de mesure (32) et d'autre part, à un circuit (7) d'alimentation en gaz neutre sous pression, par l'intermédiaire d'une électrovanne de purge (31).

## Description

L'invention a pour objet un dispositif de prélèvement sélectif de gaz pour un banc d'essai de moteur.

La mise au point des moteurs, en particulier à combustion interne, nécessite une connaissance très précise des conditions de fonctionnement du moteur. En particulier, pour réduire la consommation et éliminer, autant que possible, les polluants dans les gaz d'échappement, les circuits d'admission et d'échappement sont de plus en plus complexes et comportent, par exemple, des circuits de recyclage des gaz et divers organes de post-traitement tels que pots catalytiques pour le piégeage des oxydes d'azote, filtres à particules ou autres.

On utilise donc, pour les réglages et la mise au point d'un moteur, des bancs d'essai comportant divers systèmes de mesure vers lesquels sont envoyés les gaz prélevés en différents points des circuits d'admission, d'échappement ou de recyclage des gaz. Or, il existe un besoin croissant de sélection de voies de mesure sur les bancs d'essai qui peuvent être de différents types et sont prévues pour le contrôle de différents organes tels que filtres à particules (FAP), pièges à oxyde d'azote (NOx trap), bancs double baie, doubles EGR, etc.

De tels bancs d'essai sont, donc, équipé de systèmes de prélèvement des gaz adaptés à un certain type de matériel de mesure. Certains bancs, seulement, comportent un système de sélection de voies de mesure et de tels systèmes ne peuvent pas être transférés d'un banc à un autre. De plus, on rencontre parfois des problèmes de fiabilité.

Pour résoudre ces problèmes, un banc d'essai peut être équipé d'un système de sélection et de répartition prévu en amont lors de la mise au point du banc mais ce système est utilisable uniquement pour ce banc.

Il est possible de modifier le système de sélection et de répartition pour répondre à un nouveau besoin mais ceci demande un certain temps et le système adapté est de nouveau applicable seulement à un type de matériel de mesure.

De tels systèmes de répartition utilisent des appareillages complexes et onéreux et leur utilisation doit donc être prévue à l'avance ce qui entraîne un planning complexe en raison de la grande diversité des programmes.

On peut aussi, manuellement, réaliser les essais successivement en connectant une baie d'analyse à la bonne voie de prélèvement dans le banc mais ceci implique l'arrêt du moteur entre deux mesures et pose des problèmes de répétabilité de l'essai.

La présente invention permet de résoudre l'ensemble de ces problèmes grâce à un dispositif de prélèvement sélectif simple et relativement peu onéreux, pouvant s'adapter facilement à des bancs d'essai de différents types comportant divers points de prélèvement qui peuvent être reliés, chacun par une ligne de prélèvement, à au moins un système de mesure.

Conformément à l'invention, le dispositif de prélèvement comprend au moins un collecteur sur lequel sont branchées au moins une partie des lignes de prélèvement, chacune par l'intermédiaire d'une électrovanne de prélèvement, ledit collecteur étant relié, d'une part, à au moins un système de mesure par l'intermédiaire d'au moins une électrovanne de mesure et, d'autre part, à un système d'alimentation en gaz neutre sous pression, par l'intermédiaire d'une électrovanne de purge.

De façon particulièrement avantageuse, le dispositif comprend au moins deux collecteurs et au moins deux groupes de lignes de prélèvement branchées chacune sur un collecteur par une électrovanne de prélèvement, chaque collecteur étant relié à un circuit d'alimentation en gaz neutre, par l'intermédiaire d'une électrovanne de purge.

Dans un premier mode de réalisation, le dispositif comprend au moins deux systèmes de mesure reliés chacun à un collecteur par l'intermédiaire d'une électrovanne de mesure.

Dans un second mode de réalisation, le dispositif comprend un système de mesure unique sur lequel les collecteurs sont branchés en parallèle, chacun par l'intermédiaire d'une électrovanne de mesure.

Selon une autre caractéristique particulièrement avantageuse, le dispositif comprend des moyens de chauffage avec régulation de la température des gaz, pour chaque point de prélèvement, en amont du système de mesure, à un niveau de l'ordre de 200°C, de préférence 190°C.

Dans un mode de réalisation préférentiel, les électrovannes de prélèvement sont du type à trois voies comportant deux voies alignées et une voie transversale de branchement d'une ligne de prélèvement et sont disposées en série de façon à constituer un collecteur entre une extrémité de branchement sur une électrovanne de mesure et une extrémité de branchement sur une électrovanne de purge.

Selon une autre caractéristique préférentielle, les électrovannes de prélèvement, de mesure et de purge sont commandées sélectivement par un boîtier électrique déterminant successivement la liaison entre un point de prélèvement choisi sur le banc d'essai et le système de mesure, par ouverture des électrovannes de prélèvement et de mesure puis la purge du circuit par ouverture de l'électrovanne de purge.

Ce boîtier électrique est relié à une télécommande et peut être piloté en automatique ou en manuel au moyen d'un boîtier interface de communication adapté à la disposition du banc d'essai.

Dans un mode de réalisation préférentiel, l'ensemble du dispositif comportant un boîtier de régulation et au moins un collecteur équipé des électrovannes de prélèvement, de mesure et de purge, est monté sur un support déplaçable permettant de placer le système à proximité de différents bancs d'essai ayant chacun plusieurs points de prélèvement sur lesquels le système peut être branché. Pour cela, les lignes de prélèvement sont constituées de flexibles ayant chacun une extrémité branchée sur une électrovanne de prélèvement et une extrémité munie d'un moyen de branchement amovible sur l'un des divers points de prélèvement du banc d'essai.

D'autres caractéristiques avantageuses de l'invention apparaîtront dans la description suivante de certains modes de réalisation particuliers, donnés à titre d'exemples et représentés sur les dessins annexés.

La figure 2 est un schéma d'un dispositif à deux systèmes de mesure séparés.

La figure 3 est un schéma d'un dispositif à système de mesure unique.

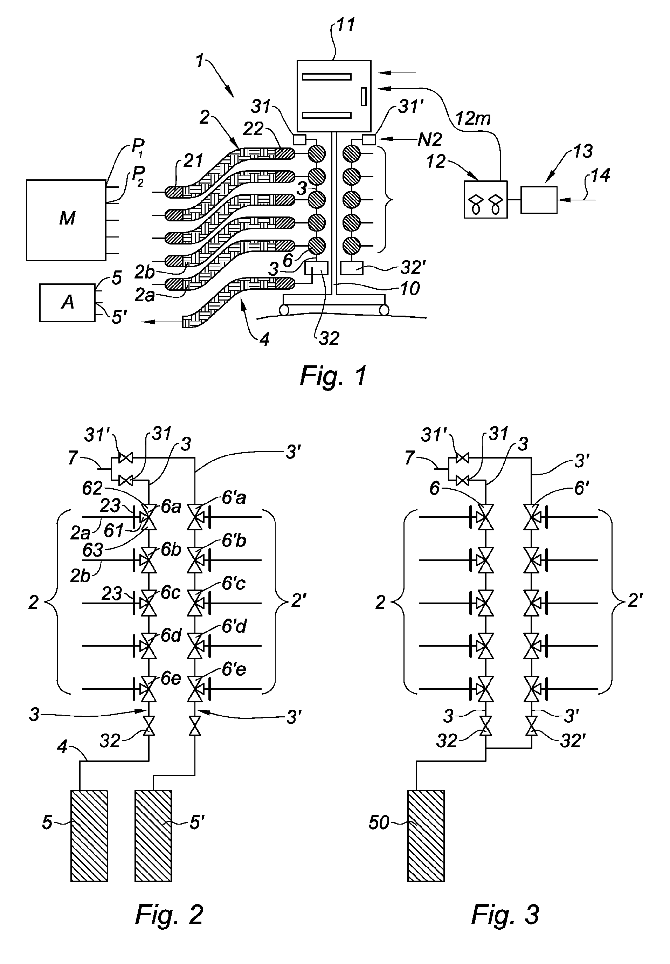

Sur la figure 1, on a représenté schématiquement l'ensemble d'un dispositif de prélèvement 1 associé à un banc d'essai A permettant d'étudier le fonctionnement d'un moteur M.

Le banc d'essai A peut être d'un type quelconque et est simplement symbolisé sur le schéma, de même que le moteur M. Ce dernier peut, en particulier, être un moteur à combustion interne pour un véhicule et est donc relié à des circuits d'admission d'air et d'échappement des gaz qui peuvent être plus ou moins complexes et comportent, par exemple, un ou plusieurs échangeurs de chaleur pour le réchauffage de l'air, un circuit de recyclage des gaz d'échappement, un compresseur de suralimentation actionné par une turbine placée sur le circuit d'échappement et divers organes de post-traitement des gaz, en particulier un catalyseur du type NOx trap, servant à piéger les oxydes d'azote, un filtre à particules, etc.

Pour la mise au point et le réglage de tels organes, il faut en particulier connaître la composition des gaz d'échappement, leur température et leur débit et cette mise au point est donc effectuée sur un banc d'essai A muni de systèmes de mesure reliés à des baies de prélèvement des gaz ménagées en différents points P₁, P₂... des circuits de gaz du moteur M.

Le dispositif de prélèvement 1 selon l'invention permet donc de relier sélectivement chaque point de prélèvement P₁, P₂... à un système de mesure du banc d'essai afin d'effectuer les mesures au moment voulu et dans un ordre déterminé.

Ce dispositif de prélèvement comporte donc un certain nombre de lignes de prélèvement 2a, 2b..., constituées chacune d'un flexible ayant une extrémité 21 qui peut être branchée, de façon amovible, sur l'une des baies de prélèvement P₁, P₂..., et une extrémité 22 qui peut être branchée sur un collecteur 3 relié par un flexible 4 à un système de mesure 5, 5' du banc d'essai A.

Dans le mode de réalisation représenté schématiquement sur la figure 2, le banc d'essai comporte, par exemple, deux systèmes de mesure 5, 5'. D'autre part, chaque ligne de prélèvement 2 est branchée, par son extrémité 22, sur une électrovanne de prélèvement 6 qui est du type à trois voies comportant une voie transversale 61 de branchement sur la ligne de prélèvement 2, et deux voies alignées 62, 63 qui permettent un branchement en série des électrovannes 6a, 6b... correspondant respectivement aux différentes lignes de prélèvement 2a, 2b..., et constituer ainsi le collecteur 3.

Chaque ligne de prélèvement 2 est reliée à son électrovanne de prélèvement 6 par l'intermédiaire d'un préfiltre 23 capable de supporter la température des gaz qui peut être, par exemple, de l'ordre de 200°C.

Le collecteur 3 est relié, à une extrémité, à un circuit 7 d'alimentation en gaz neutre sous pression, par l'intermédiaire d'une électrovanne de purge 31 et, à son autre extrémité, par l'intermédiaire d'une électrovanne 32, à une ligne 4 de liaison avec le système de mesure 5.

Dans l'exemple représenté sur la figure 2, le banc d'essai comporte deux collecteurs 3, 3' constitués chacun d'une série d'électrovannes de branchement des diverses lignes de prélèvement. Par exemple, le dispositif peut comporter dix lignes de prélèvement réparties en deux groupes 2, 2' branchés sur deux collecteurs 3, 3' comportant chacun cinq électrovannes de branchement 6a, 6b... 6e, 6'a, 6'b... 6'e. Il est ainsi possible de sélectionner dix points de prélèvement sur les circuits du moteur et d'analyser l'un après l'autre les échantillons de gaz prélevés en ces différents points en commandant sélectivement les électrovannes 6, 6'.

À cet effet, l'ouverture et la fermeture des électrovannes 6a, 6b... sont commandées par un boîtier électrique de régulation 11 relié à une télécommande manuelle 12 qui peut être actionnée par un opérateur au moyen d'un boîtier interface de communication 13.

Après ouverture sélective de l'électrovanne 6 correspondant à la baie d'analyse choisie sur les circuits et de l'électrovanne de mesure 32, les gaz prélevés sont acheminés vers le système de mesure choisi 5 ou 5'. Ensuite, l'électrovanne de purge correspondante 31 ou 31' est ouverte pour relier le collecteur au circuit 7 d'alimentation en gaz neutre, par exemple de l'azote, afin que la mesure suivante ne soit pas perturbée. Une autre électrovanne 6 peut alors être ouverte pour mettre en communication le système de mesure 5 avec l'un des points de mesure, au moyen de la ligne de prélèvement 2 correspondante.

Le dispositif à deux systèmes de mesure 5, 5' représenté sur la figure 2 permet donc d'effectuer simultanément des mesures en deux points du circuit des gaz, chaque système de mesure 5, 5' pouvant être relié à cinq points de prélèvement par des voies séparées 2, 2' comportant chacune une électrovanne 6,6'.

Avantageusement, l'ensemble du dispositif comportant les collecteurs 3, 3', les électrovannes de prélèvement 6, de mesure 32 et de purge 31 ainsi que le boîtier de régulation 11 sont placés sur un support déplaçable 10 qui peut être facilement transporté d'un banc d'essai à un autre. Il est ainsi possible de faire succéder rapidement des mesures effectuées sur deux bancs d'essai différents comportant des baies d'analyse qui peuvent être de types différents et sur lesquelles peuvent être branchés les flexibles constituants les différentes lignes de prélèvement.

Bien entendu, l'invention ne se limite pas aux détails du mode de réalisation qui vient d'être décrit à titre de simple exemple et qui pourrait faire l'objet de variantes en utilisant des moyens équivalents, sans s'écarter du cadre de protection de l'invention.

Par exemple, dans le mode de réalisation représenté sur la figure 3, le dispositif utilise un système de mesure unique 50 sur lequel peuvent être branchées, par des électrovannes 32, 32', deux séries d'électrovannes de mesure 6, 6' constituant encore deux collecteurs 3, 3' permettant de faire à l'avance les branchements nécessaires sur dix points de prélèvement afin d'effectuer rapidement toutes les mesures, chaque mesure étant suivie d'une purge du collecteur correspondant par ouverture de l'électrovanne de purge 31, 31'.

De plus, divers moyens non représentés mais faciles à concevoir peuvent chauffer entièrement le système sur tout le trajet des gaz entre le point de prélèvement P et le système de mesure A, avec une régulation de température intégrée pour le maintien de la température des gaz au niveau souhaité, par exemple à 190°C.

D'autre part, le boîtier interface de communication 13 peut être actionné par des systèmes de pilotage 14 de différents types afin de commander automatiquement et dans l'ordre voulu les ouvertures sélectives des électrovannes de mesure 32.

D'une façon générale, si l'on peut disposer, en pratique, de deux types X et Y de systèmes de pilotage de bancs d'essais et de deux types de systèmes de mesure A et B, il sera possible, grâce à l'invention, d'utiliser un même dispositif de prélèvement, transportable rapidement d'un banc d'essai à un autre, pour réaliser les mesures avec un système de type A ou B sur un banc piloté par un système de type X ou Y et le même dispositif pourra être adapté, en cas de besoin, à un autre type de système de pilotage ou de système de mesure, dès lors que les différents branchements peuvent être effectués.

## Revendications

1. Dispositif de prélèvement sélectif de gaz pour un banc d'essai (A) de moteur (M) comportant des circuits de gaz sur lesquels sont placés divers points de prélèvement (P₁, P₂...) reliés chacun par une ligne de prélèvement (2a, 2b...) à au moins un système de mesure (1), **caractérisé par le fait qu'**il comprend au moins un collecteur (3) sur lequel sont branchées au moins une partie des lignes de prélèvement (2), chacune par l'intermédiaire d'une électrovanne de prélèvement (6), ledit collecteur (3) étant relié, d'une part à au moins un système de mesure (5) par l'intermédiaire d'au moins une électrovanne de mesure (32) et d'autre part, à un circuit (7) d'alimentation en gaz neutre sous pression, par l'intermédiaire d'une électrovanne de purge (31).

2. Dispositif de prélèvement selon la revendication 1, **caractérisé par le fait qu'**il comprend au moins deux collecteurs (3, 3') et au moins deux groupes de lignes de prélèvement (2, 2') branchées chacune sur un collecteur (3, 3') par une électrovanne de prélèvement (6, 6'), chaque collecteur (3, 3') étant relié à un circuit d'alimentation en gaz neutre, par l'intermédiaire d'une électrovanne de purge (31, 31').

3. Dispositif de prélèvement selon la revendication 2, **caractérisé par le fait qu'**il comprend au moins deux systèmes de mesure (5, 5') reliés chacun à un collecteur (3, 3') par l'intermédiaire d'une électrovanne de mesure (32, 32').

4. Dispositif de prélèvement selon la revendication 2, **caractérisé par le fait qu'**il comprend un système de mesure unique (50) sur lequel les collecteurs (3, 3') sont branchés en parallèle, chacun par l'intermédiaire d'une électrovanne de mesure (32, 32').

5. Dispositif de prélèvement selon l'une des revendications précédentes, **caractérisé par le fait qu'**il comprend des moyens de chauffage avec régulation de température des gaz, entre chaque point de prélèvement (P₁, P₂...) et un système de mesure (5), à un niveau de l'ordre de 200°C.

6. Dispositif de prélèvement selon l'une des revendications précédentes, **caractérisé par le fait que** chaque ligne de prélèvement (2a, 2b...) est reliée à son électrovanne (6a, 6b...) de branchement sur le collecteur (3) par l'intermédiaire d'un préfiltre (23) capable de supporter une température de l'ordre de 200°C.

7. Dispositif de prélèvement selon l'une des revendications précédentes, **caractérisé par le fait que** les électrovannes de prélèvement (6) sont du type à trois voies comportant deux voies alignées (62, 63) et une voie transversale (61) de branchement d'une ligne de prélèvement (2) et sont disposées en série de façon à constituer un collecteur entre une extrémité de branchement sur une électrovanne de mesure (32) et une extrémité de branchement sur une électrovanne de purge (31).

8. Dispositif de prélèvement selon l'une des revendications précédentes, **caractérisé par le fait que** les électrovannes de prélèvement (6), de mesure (32) et de purge (31) sont commandées sélectivement par un boîtier électrique (11) de régulation déterminant successivement la liaison entre un point de prélèvement (P) et le système de mesure (5) puis la purge du circuit par ouverture de l'électrovanne de purge (31).

9. Dispositif de prélèvement selon la revendication 8, **caractérisé par** le faut que le boîtier de régulation (11) est relié à une télécommande manuelle (12) sur laquelle est connecté un boîtier interface de communication (13).

10. Dispositif de prélèvement selon la revendication 8, **caractérisé par le fait que** le boîtier de régulation (11) est relié à un moyen de pilotage automatique (14) adapté à la disposition du banc d'essai (A).

11. Dispositif de prélèvement selon l'une des revendications 8, 9 et 10, **caractérisé par le fait que** l'ensemble du dispositif comportant un boîtier de régulation (11) et au moins un collecteur (3) équipé des électrovannes de prélèvement (6), de mesure (32) et de purge (31), est monté sur un support déplaçable (10) de façon à pouvoir être transporté d'un banc d'essai (A) à un autre, ledit banc d'essai (A) ayant plusieurs points de prélèvement (P₁, P₂...) et les lignes de prélèvement étant constituées de flexibles (2a, 2b...) ayant chacun une extrémité (22) branchée sur une électrovanne de prélèvement (6) et une extrémité (21) munie d'un moyen de branchement amovible sur l'un des divers points de prélèvement (P₁, P₂...) du banc d'essai (A).
